# EUROPEAN PATENT SPECIFICATION

(11) **EP 1 803 542 B1**
(45) Date of publication and mention of the grant of the patent: **23.09.2009**
(21) Application number: 05257648.5
(22) Date of filing: 13.12.2005
(51) Int. Cl.: B29D 11/00, B29C 45/37, B29C 45/04, B29C 33/30

(54) **Contact lens production**
Herstellung von Kontakt-Linsen
Production de lentilles de contact

(43) Date of publication of application: 04.07.2007
(73) Proprietor: Sauflon CL Limited, Fareham Hampshire PO15 5TX (GB)
(72) Inventor: Miller, Gary Colin, Highfield Southampton SO17 1SS (GB); Erard, Francis M.G., Whiteley PO15 6TJ (GB)
(74) Representative: Hull, John Philip

(56) References cited:
- EP-A- 0 825 013
- EP-A- 1 136 222
- US-A1- 2003 077 350
- US-B1- 6 197 227

## Description

This invention relates to a mould set for making a set of contact lenses, and in particular to a mould set for producing a set of lenses which differ from each other.

Early contact lenses were made of hard materials, and were shaped using a lathing technique. Improvements in technology have resulted in soft contact lenses which are produced in a mould from a polymeric material, so that lathing is not required. These improvements have allowed the mass production of contact lenses so that the lenses can be used only once and then disposed of.

As different contact lens users have different lens requirements, it is necessary to produce a wide range of different lenses. Different lenses will require different shapes of mould. Commonly, each lens is made in a disposable polypropylene mould, with each half of the disposable mould being formed from a "master mould". For a standard size, spheric contact lens, one half of the mould is the same for all lenses, whereas the other half of the mould is changed depending on the lens power (generally referred to a "sphere power") is required. The production of spheric lenses is therefore straightforward and requires only the use of a different master mould to produce lenses with a different sphere power. The rotationally symmetrical nature of the spheric lens also means that mould can be assembled without the need to ensure any particular relative orientation between the two halves of the mould.

There are however, a number of lens types in which more than one lens feature can be varied. One example of this is a toric contact lens. Toric lenses have three variable features, namely the sphere power for correcting the focal length, the cylinder power for correcting astigmatism and the cylinder axis, which defines the orientation of the astigmatism correction, with respect to the eye of the wearer, so that the cylinder power is correctly aligned. As a result, in order to cover all permutations of these features, the number of different lenses that might be required is significantly larger than is the case for spheric contact lenses. For example, even if only the common prescriptions are made, an optician may need to supply in the region of 40 different sphere powers, 3 or 4 different cylinder powers and 18 different axis orientations, in all possible combinations. This requires a manufacturer to produce more than 2000 different lens types (referred to as stock keeping units or "SKUs"). It is this requirement to produce a large number of different SKUs which drives contact lens manufacturers to seek to reduce the complexity of manufacture.

The usual method of commercial production of toric contact lenses is to shape the back surface of the lens (the surface which is placed on the eye) to provide the cylinder power and the front surface of the lens to provide both the sphere power and an alignment feature, which acts to align the cylinder power correctly in the eye. This particular arrangement is chosen to reduce the complexity and expense of production by reducing the number of different mould halves required to produce all of the different required lens types. A different arrangement of sphere power, cylinder power and orientation feature would require many more mould half types in order to produce the more than 2000 SKUs described above.

Specifically, if all of the lens features were to built into the front lens surface more than 2000 different mould half types would be required (i.e. one for each SKU). By incorporating the sphere power into one lens surface and the cylinder power and the alignment feature into the other lens surface 40 different types of half moulds are required to produce the different sphere powers and 54 (3 cylinder powers and 18 axes) or 82 (4 cylinder powers and 18 axes) mould half types are required to produce the various combinations of cylinder powers and alignment axes.

The arrangement where the sphere power and alignment feature are produced on one surface and the cylinder power is produced on the other surface allows a reduction to 40 mould half types for the sphere power side and 3 or 4 mould half types for the other side. However, this arrangement requires accurate orientation of the two mould halves to provide the correct cylinder power alignment on the lens. In order to ensure that a lens is produced that will provide correct alignment of the cylinder power in the eye, it is essential to be able to orientate the mould for the front surface of the lens accurately with respect to the mould for the back surface of the lens in order to produce a lens in which the cylinder power axis is known.

One method of achieving the orientation is by engaging the two mould halves together and rotating one mould half relative to the other mould half until the mould halves are correctly orientated, as disclosed in US6,471,891, US6,669,460, US6,197,227, US5,611,970 and US5,916,494. The correct orientation is achieved either by using of alignment marks on both mould halves, or by using a stop, which prevents further rotation.

An alternative method, disclosed in US6,383,419 requires the use of an insert tool for making one of the mould halves in which the insert tool can be fixed in a plurality of different rotational orientations. US5,733,585 discloses a method in which the insert tool can be rotated.

US 2004/0104494 discloses a method which involves shaking the two mould halves when engaged to produce a random selection of lenses.

All of these methods have disadvantages. The methods in which there is active rotation of the mould halves relative to one another are necessarily complex and/or time-consuming. The random method of US 2004/0104494 is unsatisfactory because the number of each type of lens produced cannot be predicted in advance. In addition, this method requires subsequent sorting of the lens types.

US 2003/0077350 also discloses moulds for making contact lenses according to the preamble of claim 1.

The aim of the present invention is to provide an improved set of moulds for making a set of contact lenses which allows a simplified method of making contact lenses compared with the prior art mould sets.

Accordingly, in a first aspect of the present invention, there is provided a mould set for making contact lenses comprising:
a first unitary half mould set comprising a plurality of male mould halves fixedly attached to each other in a first array;
a second unitary half mould set comprising a plurality of female mould halves fixedly attached to each other in a second array,
wherein the arrangement of the male and female mould halves in the first and second arrays is such as to permit the engagement of respective pairs of male and female mould halves to define a corresponding set of mould cavities therebetween, and to permit engagement of each said female mould half with a different said male mould half by relative rotation of the first and second array about an axis of rotation, such that the male and female mould halves can be engaged in a plurality of different relative orientations,
wherein the shape and/or orientation of the respective male mould halves in the said first array, and the respective female mould halves in the said second array is not identical for each mould half in each said array, whereby relative rotation of the first and second array about the said axis from a first rotational orientation to a second rotational orientation results in the definition of a set of respective mould cavities of which at least some mould cavities are different in shape from the mould cavities resulting from engagement in the first said rotational orientation.

The male mould half defines the rear surface of a contact lens i.e. the surface which fits the eye, and the female mould half defines the front surface of the contact lens.

In a preferred embodiment, the mould set is adapted for the production of toric contact lenses. Toric contact lenses have a sphere power, a cylinder power and an alignment feature which allows alignment of the lens in the eye such that the cylinder power is positioned in the correct axis in the eye. Preferably each said male mould half is shaped so as to provide the cylinder power of the resulting contact lens and each said female mould half is shaped so as to provide the sphere power of the contact lens and the alignment feature. The male mould halves in a half mould set can differ from each other either by having different cylinder powers, or by different rotational alignment of the cylinder relative to the rotational axis. The female mould halves in the female half mould set can differ from each other either by having different sphere powers or by having different alignment of the alignment feature relative to the rotational axis.

In a preferred embodiment, the alignment of at least one of either the alignment feature or the cylinder is kept constant relative to the rotational axis of the mould array, and the alignment of the other said features is caused to vary. In an alternative embodiment, the alignment of both the alignment feature and the cylinder relative to the rotational axis is different in the mould halves. The choice of relative orientation of alignment feature and cylinder can be made based on the final lenses required.

The mould halves of each half mould set are arranged so that an array of mould halves has at least a degree of rotational symmetry such that male and female mould halves can be engaged together in a plurality of different orientations.

It is preferred that the number of male mould halves and female mould halves is the same and that they are equispaced around the axis of rotation, so that each male mould half of the male half mould set is able to engage with any selected one of the female mould halves of the female half mould set. In one embodiment, the arrays may have a simple two-fold rotational symmetry. However, it is preferable that the arrays have greater than two-fold rotational symmetry. Six-fold and eight-fold rotational symmetry are particularly preferred.

In an alternative embodiment, the number of male mould halves and female mould halves can be different, so long as there exists a plurality of different orientations in which more than one male and more than one female mould half can be engaged together. In a further alternative embodiment, a first half mould set can have twice as many mould halves as the second half mould set, such that in one relative orientation of the half mould sets, one half of the mould halves in the first half mould set can engage with the mould halves of the second half mould set, and in a second orientation, the other half of the mould halves in the first half mould set can engage with the mould halves of the second half mould set.

The mould halves can be connected together in each half mould set using any suitable structural means. Preferably each half mould set is a single moulded unit. More preferably, the half mould sets are injection moulded using a plastics material such as polypropylene.

It is desirable that at least one of the half mould sets has an orientation feature to allow the relative orientations of the half mould sets to be differentiated. It is particularly preferred that both the male and female half mould sets have such an orientation feature. Most preferably, the orientation feature is produced in the half mould set as it is moulded. However, the orientation features may be attached after moulding, for example by attaching a coloured label to part of the half mould set.

Where a half mould set is a single moulded unit, the shape of the unit can be any appropriate shape, so long as the array of the mould halves has rotational symmetry. The mould halves may be connected by spokes to a centrally disposed hub through which passes the rotation axis. This arrangement is particularly useful since it which allows mould production by injection of molten polymer from a single entry point at the hub. It is further preferred that each mould half is an equal distance from the injection point.

In a particularly favourable embodiment a half mould set comprises a plurality of spokes arranged around a central axis, with a mould half attached to the end of each spoke. More preferably, both half mould sets are arranged in this manner. In a further preferred embodiment, the spokes are arranged in a rotationally symmetrical pattern. The spokes may have at least four-fold symmetry, preferably four-, six or eight-fold symmetry.

In alternative embodiments, the mould halves of a half mould set can be connected together by other moulded means. The "spokes" do not need to extend from the central axis, rather they can connect adjacent mould halves. In an alternative embodiment, the mould halves are connected to spurs, which are connected to a ring or square which runs inside our outside the mould halves. In a further embodiment, the mould halves can be moulded in a solid object such as a disc. In each of these embodiments, the mould halves are positioned such that they are in a rotationally symmetrical arrangement. There is no requirement for the structure of the two half mould sets to be identical. However, it is preferred that the two half mould sets have equal numbers of mould halves and that all of the mould halves of one half mould set have the same arrangement in an array as all of the mould halves of the other half mould set.

In a second aspect of the present invention, there is provided a method of producing contact lenses, comprising:
a) providing a first unitary half mould set comprising a plurality of male mould halves fixedly attached to each other in a array and a second unitary half mould set comprising a plurality of female mould halves fixedly attached to each other in a second array, wherein the arrangement of the male and female mould halves in the first and second arrays is such as to permit the engagement of respective pairs of male and female mould halves to define a corresponding set of mould cavities therebetween, and to permit engagement of each said female mould half with a different said male mould half by relative rotation of the first and second array about an axis of rotation, such that the male and female mould halves can be engaged in a plurality of different relative orientations, wherein the shape and/or orientation of the respective male mould halves in the said first array, and the respective female mould halves in the said second array is not identical for each mould half in each said array, whereby relative rotation of the first and second array about the said axis from a first rotational orientation to a second rotational orientation results in the definition of a set of respective mould cavities of which at least some mould cavities are different in shape from the mould cavities resulting from engagement in the first said rotational orientation;
b) orientating the female half mould set and the male half mould set relative to one another;
c) injecting a polymerisable material into each female mould half;
d) engaging the two half mould sets to form a plurality of lens moulds containing the polymerisable material; and
e) polymerising the liquid to form a set of contact lenses, wherein step b) is undertaken before, at the same time as or after step c).

The male and female half mould sets can be orientated relative to one another prior to the filling of the female mould halves with polymerisable material or after the filling of the female mould halves. However, it is preferred that the orientation step and the injection step take place at essentially the same time. This limits the time that the polymerisable material is left in the mould before polymerisation and reduces the chances of contamination of the lenses.

After engagement of the mould halves, the polymerisable material in each mould is cured, and then the mould opened to allow the lens to be extracted from the mould. The curing may be carried out using any of the generally known curing means for cast contact lenses, for example using ultraviolet light. Once extracted, the lens is hydrated and packaged, usually in a blister or vial.

In a preferred embodiment, the female half mould set is held still and the male half mould set is orientated relative to the female mould set, so that the mould halves are in the desired position. In alternative embodiments, the male half mould set is held still and the female mould half is orientated or both half mould sets can be moved.

Preferably the mould sets are disposable moulds which are used only once. Each half mould set may be formed from a master mould. The master mould can be used to produce a large number of half mould sets of the same type. These half mould sets can then be combined in different orientations to produce sets of contact lenses according to production requirements.

The present invention allows the skilled person to produce different numbers of contact lenses of different sphere power, cylinder power and cylinder axis. It will be apparent to the skilled person how the half mould sets should be produced to maximise efficiency.

Typically, the half mould sets will be produced in batches. The master moulds need to be changed only after each batch. Change of the master moulds is a particularly time-consuming process, and therefore it is preferable to minimise the number of changes required.

It is further preferred that the contact lenses are produced in batches using the same half mould sets and the same relative orientations.

In a preferred embodiment, a computer system is used in conjunction with a make-to-stock manufacturing environment to select the batches to be made. The computer system periodically reviews the stock levels of each SKU (stock keeping unit) and compares it to a pre-set target level, which is typically defined as the sales requirements for a fixed number of weeks. Algorithms are applied taking into account additional factors such as known and forecast orders, economic manufacturing batch size and yearly sales volumes. On a case by case basis the system can then decide whether more of any particular SKU should be made, and how many should be made, and based on this decision generates a shop order. The shop orders are then grouped together so that orders of similar size can be run most effectively to form the basis of the production scheduling.

In a third aspect of the present invention, there is provided a method of making a mould set, comprising:
moulding as a unitary moulding a first half mould set comprising a plurality of male mould halves fixedly attached to each other in a first array; and
moulding a second half mould set as a unitary moulding comprising a plurality of female mould halves fixedly attached to each other in a second array,
wherein the arrangement of the male and female mould halves in the first and second arrays is such as to permit the engagement of respective pairs of male and female mould halves to defme a corresponding set of mould cavities therebetween, and to permit engagement of each said female mould half with a different said male mould half by relative rotation of the first and second array about an axis of rotation, such that the male and female mould halves can be engaged in a plurality of different relative orientations,
wherein the shape and/or orientation of the respective male mould halves in the said first array, and the respective female mould halves in the said second array is not identical for each mould half in each said array, whereby relative rotation of the first and second array about said axis from a first rotational orientation to a second rotational orientation results in the definition of a set of respective mould cavities of which at least some mould cavities are different in shape from the mould cavities resulting from engagement in the first said rotational orientation.

Preferably the half mould sets are formed by injection moulding. The half mould sets can be produced using standard injection moulding equipment, such as those made by Battenfeld, BOY, Netstal, Engel, Arburg, Demag or Sumitomo.

Although it is preferred that the mould set is used only once, the present invention also contemplates the use of reusable moulds such as quartz moulds and metal moulds.

The present invention will now be described further with reference to the drawings in which:
Figure 1 shows typical male and female mould halves which form a lens-shaped cavity;
Figure 2 shows preferred half mould sets; and
Figure 3 exemplifies the multiple combinations which are produced from a half mould set.

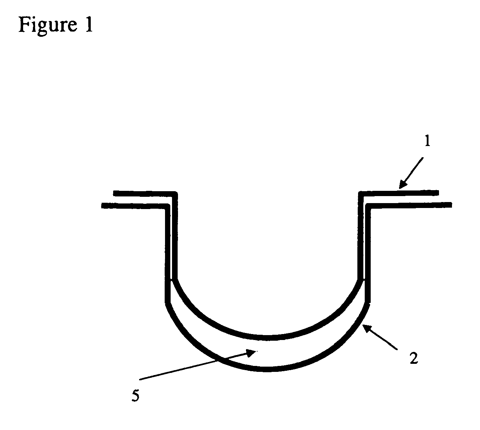

Figure 1 shows how a male mould half (1) and a female mould half (2) fit together to form a lens shaped cavity (5). The mould halves are commonly disposable moulds which are used only once. These mould halves are formed using so-called "master" moulds which are typically formed of metal, typically steel. The optical faces of the disposable moulds are defined by an insert tool in the master mould. This insert tool is typically formed of a metal which is softer than steel, such as brass, aluminium, nickel or nickel alloys. The insert tool could however be made from steel. The disposable moulds are typically formed from a plastics material such as polypropylene. Preferably, the moulds are formed by injection moulding.

The master mould is a multi-cavity mould, which produces disposable half mould sets comprising a plurality of mould halves.

In an alternative embodiment, the mould halves for making the contact lenses are reusable. Suitable mould half materials include quartz and various metals. Thermoplastic contact lens material can be used in combination with the reusable moulds.

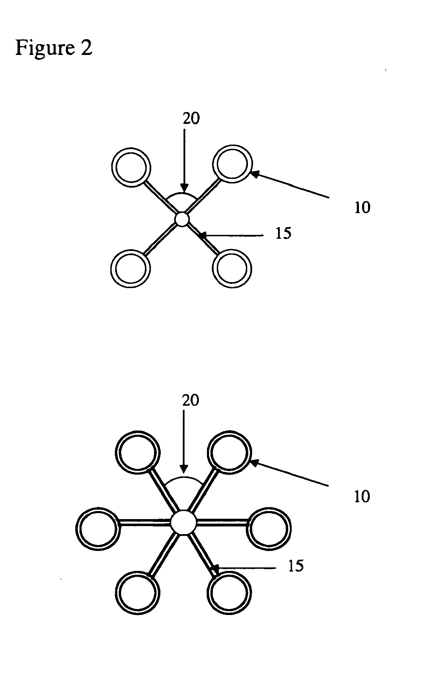

Figure 2 shows two half mould sets in accordance with the present invention. The set is made up of four or six "petals" (10), each of which is an individual mould half. The four mould halves are either all male mould halves or all female mould halves. The mould halves are all connected together via a runner system (15), such that there are a series of stalks extending from a central point.

The half mould set has an additional moulded web (20) between two of the stalks to allow the user to know the orientation of the half mould set. More than one moulded web can be moulded onto the half mould set. Other alternative means of marking or shaping the half mould set so that its orientation is known will be apparent to the skilled person.

The petals are all positioned the same distance from the central axis of the half mould set. The petals are also regularly spaced around the central axis, so that the petals have four-fold rotational symmetry.

Although the half mould set in Figure 2 has four petals, other numbers of petals are possible. It is preferred that the half mould set has from 4 to 16 petals. 4, 6 or 8 petals per half mould set are particularly preferred.

The half mould set shown in Figure 2 is easy to produce by injection moulding. However, alternatively, the half mould set could be formed of a solid disc with the petals positioned in the disc. Alternatively, the half mould set can be in the form of a hoop, or a square or H frame. The petals can be positioned on the inside or outside of the hoop or square. Other possible shapes of half mould set will be apparent to the skilled person.

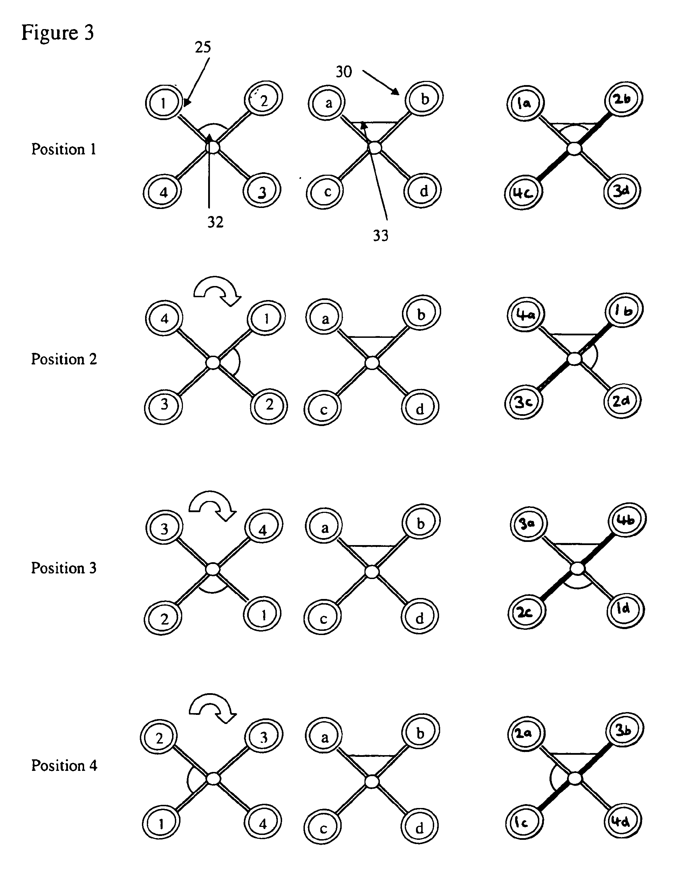

Figure 3 shows how two half mould sets fit together to produce a series of different combinations of lenses. In this Example, each of the petals on the first male half mould set (25), numbered 1 to 4 has a different cylinder axis and each of the petals on the second female half mould set (30), numbered a to d has a different sphere power. The relative orientation of the two half mould sets (25, 30) can be seen from the moulded web portions (32, 33) on each half mould set. As can be seen, 16 different contact lens mould combinations result from the different orientations of the two half mould set, 4 in each relative orientation, according to the table below.

**Table 1**

| | Position 1 | | Position 2 | | Position 3 | | Position 4 | |
|---|---|---|---|---|---|---|---|---|
| | Male | Female | Male | Female | Male | Female | Male | Female |
| Top left | 1 | a | 4 | a | 3 | a | 2 | a |
| Top right | 2 | b | 1 | b | 4 | b | 3 | b |
| Bottom left | 4 | c | 3 | c | 2 | c | 1 | c |
| Bottom right | 3 | d | 2 | d | 1 | d | 4 | d |

If there are more petals in each half mould set, then the number of different orientations increases, and therefore the total number of different combinations increases. For 6 petals there are 36 different combinations, for 8 petals there are 64 combinations.

As well as changing the sphere power and the cylinder orientation, the cylinder power can also be changed.

Therefore, it can be seen that from two master mould sets, it is possible to produce half mould sets which allow the production of large numbers of different contact lens types. Where certain lens types (sphere power, cylinder power and orientation) are more popular than the others, the half mould sets can be set up so that more of that lens type are produced, either by making more lenses using one particular orientation, or by including in the half mould set more than one petal which gives the required sphere power, cylinder power or orientation. Accordingly, it is straightforward to set up the half mould sets to produce lenses according to customer requirements.

In order to produce the 2000 different SKUs which an optician supplying toric lenses might be called upon to supply, it would be necessary to have more than 45 petals. However, 6 petals are sufficient to allow groupings of the most popular SKUs for a set of toric lenses. When other sets of lenses are required, a new master mould can be set up, and a new set of half mould sets can be made. By changing the petals of only one half mould set, a completely different set of lenses can be produced.

It is particularly preferred that 6 petals are used in each half mould set. This provides up to 36 different SKUs in a given set. Using information based on sales, the skilled person can select the best combinations of sphere power, cylinder power and cylinder axis in any given set so as to produce contact lenses in amounts that approximately resemble the sales figures. It is preferred to group contact lens types of similar popularity together to minimise the number of set-up changes required to the master moulds.

Certain orientations of cylinder axis are more common than others. A cylinder axis of 180 degrees is most common, and is approximately twice as common as a cylinder axis of 90 degrees, which in turn is more common than other cylinder axes. Demand for cylinder powers of -0.75 and -1.25 are similar, and demand for sphere powers -1.00, -1.25, -1.50, -1.75, -2.00, and -2.25 are also all similar. Therefore, one suitable set-up for a 6 petal system could be as follows:

**Table 2**

| | Female Half | Male Half | |
|---|---|---|---|
| Cavity | Sphere Power | Cylinder Power | Cylinder Axis |
| 1 | -1.00 | -0.75 | 90 |
| 2 | -1.25 | -0.75 | 180 |
| 3 | -1.50 | -0.75 | 180 |
| 4 | -1.75 | -1.25 | 90 |
| 5 | -2.00 | -1.25 | 180 |
| 6 | -2.25 | -1.25 | 180 |

This set up can produce 24 different SKUs, with there being twice as many contact lenses having an axis of 180, compared to 90, which is in line with sales requirements.

It is also preferred to group together low volume contact lens types. An Example of a suitable low volume set of lenses would be:

**Table 3**

| | Female Half | Male Half | |
|---|---|---|---|
| Cavity | Sphere Power | Cylinder Power | Cylinder Axis |
| 1 | +1.00 | -1.75 | 40 |
| 2 | +1.25 | -1.75 | 50 |
| 3 | +1.50 | -1.75 | 60 |
| 4 | +1.75 | -1.75 | 120 |
| 5 | +2.00 | -1.75 | 130 |
| 6 | +2.25 | -1.75 | 140 |

These are of course only Examples of particular sets which may be useful in creating a complete inventory of contact lenses.

The contact lenses are made using the half mould sets of the present invention by taking the female half mould set and introducing a polymerisable contact lens mixture into the mould halves of the female mould set. The male half mould set is then orientated relative to the female half mould set so that the correct set of contact lens moulds will be produced. The two half mould sets are then assembled together to produce a plurality of lens shaped cavities containing the polymerisable mixture. The mixture is then polymerised. Polymerisation usually takes place by using thermal initiation. However, it can also be initiated by use of ultraviolet light or microwaves. Alternatively, a prepolymerised material can be used which can subsequently be cross-linked by ultraviolet light or a thermoplastic material could be used.

Once the contact lens has been formed, it is extracted from the mould, hydrated and packaged in a blister or vial.

Although the specific preferred embodiment described above relates to toric contact lenses, the invention is equally applicable to other sets of lenses where the lenses are typically formed from mould halves where both the male and female mould halves differ. Examples include multifocal lenses, where one focal component is provided by one mould half and another focal component is provided by the other mould half. In addition, the invention can be used when producing standard spheric lenses. A first mould half provides the sphere power and the second mould half is used to vary the size of the lens produced, so that sets of lenses of differing sizes can be produced.

## Claims

1. A mould set for making contact lenses comprising:
a first unitary half mould set comprising a plurality of male mould halves fixedly attached to each other in a first array;
a second unitary half mould set comprising a plurality of female mould halves fixedly attached to each other in a second array,
wherein the arrangement of the male and female mould halves in the first and second arrays is such as to permit the engagement of respective pairs of male and female mould halves to define a corresponding set of mould cavities therebetween, and to permit engagement of each said female mould half with a different said male mould half by
relative rotation of the first and second array about an axis of rotation, **characterised in that** the male and female mould halves can be engaged in a plurality of different relative orientations, wherein the shape and/or orientation of the respective male mould halves in the said first array, and the respective female mould halves in the said second array is not identical for each mould half in each said array, whereby relative rotation of the first and second array about the said axis from a first rotational orientation to a second rotational orientation results in the definition of a set of respective mould cavities of which at least some mould cavities are different in shape from the mould cavities resulting from engagement in the first said rotational orientation.

2. A mould set as claimed in claim 1 for making toric contact lenses, wherein each said male mould half is shaped so as to provide a cylinder power for a contact lens and each said female mould half is shaped so as to provide a sphere power for a contact lens and an alignment feature for aligning a contact lens in position in the eye.

3. A mould set as claimed in any one of the preceding claims, wherein each half mould set is a single moulded unit.

4. A mould set as claimed in any one of the preceding claims, wherein at least one of the half mould sets has an orientation feature to allow the relative orientations to be differentiated.

5. A mould set as claimed in Claim 4, wherein both half mould sets have an orientation feature to allow the relative orientations to be differentiated.

6. A mould set as claimed in any one of the preceding claims, wherein the first half mould set comprises a plurality of spokes arranged around a central axis and wherein each said male mould half attached to the end of each spoke.

7. A mould set as claimed in Claim 6, wherein the spokes are arranged in a rotationally symmetrical pattern.

8. A mould set as claimed in any one of the preceding claims, wherein the second mould half set comprises a plurality of spokes arranged around a central axis and wherein each said female mould half is attached to the end of each spoke.

9. A mould set as claimed in Claim 8, wherein the spokes are arranged in a rotationally symmetrical pattern.

10. A mould set as claimed in Claim 7 or Claim 9, wherein the spokes have at least four-fold rotational symmetry.

11. A method of producing contact lenses, comprising:
a) providing a first unitary half mould set comprising a plurality of male mould halves fixedly attached to each other in a array and a second unitary half mould set comprising a plurality of female mould halves fixedly attached to each other in a second array, wherein the arrangement of the male and female mould halves in the first and second arrays is such as to permit the engagement of respective pairs of male and female mould halves to define a corresponding set of mould cavities therebetween, and to permit engagement of each said female mould half with a different said male mould half by relative rotation of the first and second array about an axis of rotation, such that the male and female mould halves can be engaged in a plurality of different relative orientations, wherein the shape and/or orientation of the respective male mould halves in the said first array, and the respective female mould halves in the said second array is not identical for each mould half in each said array, whereby relative rotation of the first and second array about the said axis from a first rotational orientation to a second rotational orientation results in the definition of a set of respective mould cavities of which at least some mould cavities are different in shape from the mould cavities resulting from engagement in the first said rotational orientation;
b) orientating the female half mould set and the male half mould set relative to one another;
c) injecting a polymerisable material into each female mould half;
d) engaging the two half mould sets to form a plurality of lens moulds containing the polymerisable material; and
e) polymerising the liquid to form a set of contact lenses, wherein step b) is undertaken before, at the same time as or after step c).

12. A method of making a mould set, comprising:
moulding as a unitary moulding a first half mould set comprising a plurality of male mould halves fixedly attached to each other in a first array; and
moulding a second half mould set as a unitary moulding comprising a plurality of female mould halves fixedly attached to each other in a second array,
wherein the arrangement of the male and female mould halves in the first and second arrays is such as to permit the engagement of respective pairs of male and female mould halves to define a corresponding set of mould cavities therebetween, and to permit engagement of each said female mould half with a different said male mould half by relative rotation of the first and second array about an axis of rotation, such that the male and female mould halves can be engaged in a plurality of different relative orientations,
wherein the shape and/or orientation of the respective male mould halves in the said first array, and the respective female mould halves in the said second array is not identical for each mould half in each said array, whereby relative rotation of the first and second array about the said axis from a first rotational orientation to a second rotational orientation results in the definition of a set of respective mould cavities of which at least some mould cavities are different in shape from the mould cavities resulting from engagement in the first said rotational orientation.

## Patentansprüche

1. Formensatz zum Herstellen von Kontaktlinsen, umfassend:
einen ersten unitären Halbformsatz umfassend eine Vielzahl von Patrizenhälften, die in einer ersten Anordnung fest miteinander befestigt sind;
einen zweiten unitären Halbformsatz umfassend eine Vielzahl von Matrizenhälften, die in einer zweiten Anordnung fest miteinander befestigt sind,
wobei die Anordnung der Patrizen- und Matrizenhälften in der ersten und zweiten Anordnung dergestalt ist, dass ein Eingriff von jeweiligen Paaren von Patrizen- und Matrizenhälften möglich ist, um einen entsprechenden Satz von Formhohlräumen zwischen diesen zu begrenzen, und dass ein Eingriff jeder genannten Matrizenhälfte mit einer anderen der genannten Patrizenhälften möglich ist durch eine relative Drehung der ersten und zweiten Anordnung um eine Drehachse, **dadurch gekennzeichnet, dass** die Patrizenhälften und Matrizenhälften in einer Vielzahl von unterschiedlichen relativen Ausrichtungen in Eingriff sein können, wobei die Form und/oder die Ausrichtung der jeweiligen Patrizenhälften in der ersten Anordnung und der jeweiligen Matrizenhälften in der zweiten Anordnung nicht für jede Formhälfte in jeder genannten Anordnung identisch ist, wodurch eine relative Drehung der ersten und zweiten Anordnung um die genannte Achse von einer ersten Drehausrichtung in eine zweite Drehausrichtung eine Ausbildung eines Satzes jeweiliger Formhohlräume zur Folge hat, von denen mindestens einige Formhohlräume sich bezüglich der Form von den Formhohlräumen unterscheiden, die sich aus einem Eingriff in der ersten genannten Drehausrichtung ergeben.

2. Formensatz nach Anspruch 1 zum Herstellen von torischen Kontaktlinsen, wobei jede der genannten Patrizenhälften so geformt ist, dass sie eine Zylinderstärke für eine Kontaktlinse bereitstellt und jede genannte Matrizenhälfte so geformt ist, dass sie eine sphärische Stärke für eine Kontaktlinse und ein Justiermerkmal bereitstellt, um eine Kontaktlinse in ihrer Position im Auge zu justieren.

3. Formensatz nach einem der vorhergehenden Ansprüche, wobei jeder Halbformsatz eine individuelle geformte Einheit ist.

4. Formensatz nach einem der vorhergehenden Ansprüche, wobei mindestens einer der Halbformsätze ein Ausrichtungsmerkmal hat, um eine Differenzierung der relativen Ausrichtungen zu ermöglichen.

5. Formensatz nach Anspruch 4, wobei beide Halbformsätze ein Ausrichtungsmerkmal haben, um eine Differenzierung der relativen Ausrichtungen zu ermöglichen.

6. Formensatz nach einem der vorhergehenden Ansprüche, wobei der erste Halbformsatz eine Vielzahl von Speichen aufweist, die um eine Mittelachse herum angeordnet sind, und wobei jede Patrizenhälfte an dem Ende jeder Speiche befestigt ist.

7. Formensatz nach Anspruch 6, wobei die Speichen in einem rotationssymmetrischen Muster angeordnet sind.

8. Formensatz nach einem der vorhergehenden Ansprüche, wobei der zweite Halbformsatz eine Vielzahl von Speichen aufweist, die um eine Mittelachse herum angeordnet sind, und wobei jede Matrizenhälfte an dem Ende jeder Speiche befestigt ist.

9. Formensatz nach Anspruch 8, wobei die Speichen in einem rotationssymmetrischen Muster angeordnet sind.

10. Formensatz nach Anspruch 7 oder 9, wobei die Speichen mindestens eine vierfache Rotationssymmetrie haben.

11. Verfahren zum Herstellen von Kontaktlinsen, umfassend:
a) Bereitstellen eines ersten unitären Halbformsatzes umfassend eine Vielzahl von Patrizenhälften, die in einer Anordnung fest miteinander befestigt sind, und eines zweiten unitären Halbformsatzes umfassend eine Vielzahl von Matrizenhälften, die in einer zweiten Anordnung fest miteinander befestigt sind,
wobei die Anordnung der Patrizen- und Matrizenhälften in der ersten und zweiten Anordnung dergestalt ist, dass ein Eingriff von jeweiligen Paaren von Patrizen- und Matrizenhälften möglich ist, um einen entsprechenden Satz von Formhohlräumen zwischen diesen zu begrenzen, und dass ein Eingriff jeder genannten Matrizenhälfte mit einer anderen der genannten Patrizenhälften möglich ist durch eine relative Drehung der ersten und zweiten Anordnung um eine Drehachse, so dass die Patrizenhälften und Matrizenhälften in einer Vielzahl von unterschiedlichen relativen Ausrichtungen in Eingriff sein können, wobei die Form und/oder die Ausrichtung der jeweiligen Patrizenhälften in der ersten Anordnung und der jeweiligen Matrizenhälften in der zweiten Anordnung nicht für jede Formhälfte in jeder genannten Anordnung identisch ist, wodurch eine relative Drehung der ersten und zweiten Anordnung um die genannte Achse von einer ersten Drehausrichtung in eine zweite Drehausrichtung eine Ausbildung eines Satzes jeweiliger Formhohlräume zur Folge hat, von denen mindestens einige Formhohlräume sich bezüglich der Form von den Formhohlräumen unterscheiden, die sich aus einem Eingriff in der ersten genannten Drehausrichtung ergeben.
b) Ausrichten des Matrizenhalbformsatzes und des Patrizenhalbformsatzes relativ zueinander;
c) Einspritzen eines polymerisierbaren Materials in jede Matrizenformhälfte;
d) Eingriff der beiden Halbformsätze zum Bilden einer Vielzahl von Linsenformen, die das polymerisierbare Material enthalten; und
e) Polymerisieren der Flüssigkeit, um einen Satz Kontaktlinsen zu bilden, wobei Schritt b) vor, gleichzeitig mit, oder nach Schritt c) ausgeführt wird.

12. Verfahren zum Herstellen eines Formensatzes, umfassend:
Formen als unitäres Formen eines ersten Halbformsatzes umfassend eine Vielzahl von Patrizenhälften, die in einer ersten Anordnung fest miteinander befestigt sind, und
Formen eines zweiten Halbformsatzes als unitäres Formen umfassend eine Vielzahl von Matrizenhälften, die in einer zweiten Anordnung fest miteinander befestigt sind,
wobei die Anordnung der Patrizen- und Matrizenhälften in der ersten und zweiten Anordnung dergestalt ist, dass ein Eingriff von jeweiligen Paaren von Patrizen- und Matrizenhälften möglich ist, um einen entsprechenden Satz von Formhohlräumen zwischen diesen zu begrenzen, und dass ein Eingriff jeder genannten Matrizenhälfte mit einer anderen der genannten Patrizenhälften möglich ist durch eine relative Drehung der ersten und zweiten Anordnung um eine Drehachse, so dass die Patrizenhälften und Matrizenhälften in einer Vielzahl von unterschiedlichen relativen Ausrichtungen in Eingriff sein können, wobei die Form und/oder die Ausrichtung der jeweiligen Patrizenhälften in der ersten Anordnung und der jeweiligen Matrizenhälften in der zweiten Anordnung nicht für jede Formhälfte in jeder genannten Anordnung identisch ist, wodurch eine relative Drehung der ersten und zweiten Anordnung um die genannte Achse von einer ersten Drehausrichtung in eine zweite Drehausrichtung eine Ausbildung eines Satzes entsprechender Formhohlräume zur Folge hat, von denen mindestens einige Formhohlräume sich bezüglich der Form von den Formhohlräumen unterscheiden, die sich aus einem Eingriff in der ersten Drehausrichtung ergeben.

## Revendications

1. Ensemble de moules pour fabriquer des lentilles de contact comprenant :
un premier ensemble unitaire de demi-moules comprenant une pluralité de demi-moules mâles attachés fixement l'un à l'autre dans un premier réseau ,
un deuxième ensemble unitaire de demi-moules comprenant une pluralité de demi-moules femelles attachés fixement l'un à l'autre dans un deuxième réseau,
dans lequel l'agencement des demi-moules mâles et femelles dans les premier et deuxième réseaux est tel qu'il permet la mise en prise de paires respectives de demi-moules mâles et femelles pour définir un ensemble correspondant de cavités de moules entre celles-ci, et qu'il permet la mise en prise de chaque dit demi-moule femelle avec un dit demi-moule mâle différent par rotation relative desdits premier et deuxième réseaux autour d'un axe de rotation, **caractérisé en ce que** les demi-moules mâles et femelles peuvent être mis en prise dans une pluralité de différentes orientations relatives, dans lequel la forme et/ou l'orientation des demi-moules mâles respectifs dans ledit premier réseau et des demi-moules femelles respectifs dans ledit deuxième réseau ne sont pas identiques pour chaque demi-moule dans chaque dit réseau, de telle manière que la rotation relative des premier et deuxième réseaux autour dudit axe d'une première orientation rotationnelle à une deuxième orientation rotationnelle engendre la définition d'un ensemble de cavités de moules respectives parmi lesquelles au moins certaines cavités de moules sont de forme différente de celle des cavités de moules découlant de la mise en prise dans ladite première orientation rotationnelle.

2. Ensemble de moules selon la revendication 1 pour fabriquer des lentilles de contact toriques, dans lequel chaque dit demi-moule mâle est formé de manière à fournir une puissance cylindrique pour une lentille de contact et chaque dit demi-moule femelle est formé de manière à fournir une puissance sphérique pour une lentille de contact et une caractéristique d'alignement pour aligner une lentille de contact en position dans l'oeil.

3. Ensemble de moules selon l'une quelconque des revendications précédentes, dans lequel chaque ensemble de demi-moules est une unité moulée unique.

4. Ensemble de moules selon l'une quelconque des revendications précédentes, dans lequel au moins l'un des ensembles de demi-moules a une caractéristique d'orientation pour permettre de différencier les orientations relatives.

5. Ensemble de moules selon la revendication 4, dans lequel les deux ensembles de demi-moules ont une caractéristique d'orientation pour permettre de différencier les orientations relatives.

6. Ensemble de moules selon l'une quelconque des revendications précédentes, dans lequel le premier ensemble de demi-moules comprend une pluralité de rayons agencés autour d'un axe central et dans lequel chaque dit demi-moule mâle est attaché à l'extrémité de chaque rayon.

7. Ensemble de moules selon la revendication 6, dans lequel les rayons sont agencés dans un motif symétrique en rotation.

8. Ensemble de moules selon l'une quelconque des revendications précédentes, dans lequel le deuxième ensemble de demi-moules comprend une pluralité de rayons agencés autour d'un axe central et dans lequel chaque dit demi-moule femelle est attaché à l'extrémité de chaque rayon.

9. Ensemble de moules selon la revendication 8, dans lequel les rayons sont agencés dans un motif symétrique en rotation.

10. Ensemble de moules selon la revendication 7 ou la revendication 9, dans lequel les rayons ont une symétrie rotationnelle en au moins quatre parties.

11. Procédé pour fabriquer des lentilles de contact, comprenant les étapes consistant à :
a) fournir un premier ensemble unitaire de demi-moules comprenant une pluralité de demi-moules mâles attachés fixement l'un à l'autre dans un premier réseau et un deuxième ensemble unitaire de demi-moules comprenant une pluralité de demi-moules femelles attachés fixement l'un à l'autre dans un deuxième réseau, dans lequel l'agencement des demi-moules mâles et femelles dans les premier et deuxième réseaux est tel qu'il permet la mise en prise de paires respectives de demi-moules mâles et femelles pour définir un ensemble correspondant de cavités de moules entre celles-ci, et qu'il permet la mise en prise de chaque dit demi-moule femelle avec un dit demi-moule mâle différent par rotation relative desdits premier et deuxième réseaux autour d'un axe de rotation, de sorte que les demi-moules mâles et femelles peuvent être mis en prise dans une pluralité de différentes orientations relatives, dans lequel la forme et/ou l'orientation des demi-moules mâles respectifs dans ledit premier réseau et des demi-moules femelles respectifs dans ledit deuxième réseau ne sont pas identiques pour chaque demi-moule dans chaque dit réseau, de telle manière que la rotation relative des premier et deuxième réseaux autour dudit axe d'une première orientation rotationnelle à une deuxième orientation rotationnelle engendre la définition d'un ensemble de cavités de moules respectives parmi lesquelles au moins certaines cavités de moules sont de forme différente de celle des cavités de moules découlant de la mise en prise dans ladite première orientation rotationnelle ,
b) orienter l'ensemble de demi-moules femelles et l'ensemble de demi-moules mâles l'un par rapport à l'autre,
c) injecter un matériau polymérisable dans chaque demi-moule femelle ,
d) mettre en prise les deux ensembles de demi-moules pour former une pluralité de moules de lentilles contenant le matériau polymérisable , et
e) polymériser le liquide pour former un ensemble de lentilles de contact, dans lequel l'étape b) est entreprise avant, en même temps ou après l'étape c).

12. Procédé de fabrication d'un ensemble de moules, comprenant les étapes consistant à :
mouler en tant que moulage unitaire un premier ensemble de demi-moules comprenant une pluralité de demi-moules mâles attachés fixement l'un à l'autre dans un premier réseau , et
mouler un deuxième ensemble de demi-moules en tant que moulage unitaire comprenant une pluralité de demi-moules femelles attachés fixement l'un à l'autre dans un deuxième réseau,
dans lequel l'agencement des demi-moules mâles et femelles dans les premier et deuxième réseaux est tel qu'il permet la mise en prise de paires respectives de demi-moules mâles et femelles pour définir un ensemble correspondant de cavités de moules entre celles-ci, et qu'il permet la mise en prise de chaque dit demi-moule femelle avec un dit demi-moule mâle différent par rotation relative desdits premier et deuxième réseaux autour d'un axe de rotation, de sorte que les demi-moules mâles et femelles peuvent être mis en prise dans une pluralité de différentes orientations relatives, dans lequel la forme et/ou l'orientation des demi-moules mâles respectifs dans ledit premier réseau et des demi-moules femelles respectifs dans ledit deuxième réseau ne sont pas identiques pour chaque demi-moule dans chaque dit réseau, de telle manière que la rotation relative des premier et deuxième réseaux autour dudit axe d'une première orientation rotationnelle à une deuxième orientation rotationnelle engendre la définition d'un ensemble de cavités de moules respectives parmi lesquelles au moins certaines cavités de moules sont de forme différente de celle des cavités de moules découlant de la mise en prise dans ladite première orientation rotationnelle.
